# FASCICULE DE BREVET EUROPEEN

(11) **EP 3 707 039 B1**
(45) Date de publication et mention de la délivrance du brevet: **22.09.2021**
(21) Numéro de dépôt: 18875004.6
(22) Date de dépôt: 08.11.2018
(51) Int. Cl.: B60T 13/66

(54) **SYSTEME DE COMMANDE D'UN FREIN DE PARKING ELECTRIQUE PAR MODULATION EN LARGEUR D'IMPULSIONS**
SYSTEM ZUR STEUERUNG EINER ELEKTRISCHEN FESTSTELLBREMSE DURCH PULSWEITENMODULATION
SYSTEM FOR CONTROLLING AN ELECTRIC PARKING BRAKE BY PULSE WIDTH MODULATION

(30) Priorité: 09.11.2017 FR 1760528
(43) Date de publication de la demande: 16.09.2020
(73) Titulaire: Hitachi Astemo France, 93700 Drancy (FR)
(72) Inventeur: WITTE, Lennart, 67000 Strasbourg (FR)
(74) Mandataire: Brevalex
(86) Numéro de dépôt international: PCT/FR2018/052773
(87) Numéro de publication internationale: WO 2019/092374

(56) Documents cités:
- DE-A1-102005 051 521
- DE-A1-102011 084 534
- DE-A1-102016 213 169
- JP-A- 2015 107 746
- US-A1- 2016 032 995

## Description

### DOMAINE TECHNIQUE ET ÉTAT DE LA TECHNIQUE ANTÉRIEURE

La présente invention se rapporte à un système de commande d'un système de frein de parking électrique pour véhicule automobile, et à un procédé de commande d'un système de frein de parking électrique.

Dans la plupart des automobiles actuelles, le frein de service est assuré par des freins à disques et/ou des freins à tambour.

Ils assurent la fonction de freinage de service, visant à ralentir, voire arrêter, le véhicule automobile. La fonction de frein de parking ou de stationnement visant à immobiliser un véhicule à l'arrêt et la fonction de frein de secours sont généralement obtenues avec le système assurant le frein de parking.

L'application du frein de parking peut être obtenue en tirant sur un levier disposé dans l'habitacle qui est relié à un mécanisme situé dans un frein à tambour ou un frein à disque, par l'intermédiaire d'un câble de frein. Le mécanisme tend à écarter les segments de freinage des freins à tambour pour les appliquer contre les tambours. Dans le cas d'un frein à disque, les plaquettes sont serrées sur le disque de frein.

Pour améliorer le confort du conducteur et la sécurité d'application du freinage de parking, l'industrie automobile a développé un frein de parking électrique.

Deux types de systèmes existent. Le premier type de frein de parking électrique comporte un moteur électrique qui exerce une traction sur le câble, ce système est désigné Cable Puller System en terminologie anglo-saxonne. Le deuxième type de frein de parking électrique comporte un actionneur muni d'un moteur électrique au moins sur chaque frein arrière, et provoque le serrage des freins.

Le conducteur appuie par exemple sur un bouton disposé sur le tableau de bord pour activer le freinage de parking électrique.

Les systèmes de frein de parking électrique comportent des moteurs électriques à courant continu, la mise en œuvre de tels moteurs étant recommandée par exemple par l'association allemande de l'industrie automobile dans ses « VDA Recommendation ».

La vitesse de serrage des freins, par exemple la vitesse d'application des plaquettes de freins contre le disque dans le cas d'un frein a disque, se fait à vitesse constante qui est relativement rapide. Il s'agit d'une commande en tout ou rien. Cette commande en tout ou rien est satisfaisante en fonctionnement normal du frein de parking, en effet lorsque l'on souhaite activé le freinage de parking, le véhicule est la plupart du temps à l'arrêt, les plaquettes sont serrées contre le disque à vitesse constante.

Or, dans certaines situations, cette commande en tout ou rien peut être dommageable.

Par exemple, lors du changement de plaquette dans le cas d'un frein à disque, le frein est ouvert au maximum, i.e. le piston est reculé au maximum jusqu'à venir en appui contre des butées, le contact avec ces butées permettant de détecter que le frein a atteint sa position d'ouverture maximale. Cependant la mise en contact avec les butées peut être brutale.

Dans un autre exemple, pour réaliser certains tests ou vérifications, le véhicule est monté sur un banc à rouleaux qui applique aux roues du véhicule plusieurs couples d'entraînement. Le frein de parking est alors activé. Il est requis que celui-ci augmente le couple de serrage en fonction du couple appliqué par les rouleaux. Or le cas d'un moteur à courant continu assure une application en tout ou rien du frein de parking, ce qui provoque une mise en vibration du véhicule. Ces vibrations peuvent avoir pour conséquence de fausser les résultats de mesure.

Les documents DE 10 2011 084534 et DE 10 2016 213169 décrivent des systèmes de commande d'un système de frein de parking électrique.

### EXPOSÉ DE L'INVENTION

C'est par conséquent un but de la présente invention d'offrir un système de commande d'un système de frein de parking électrique et une méthode de commande
d'un système de frein de parking électrique permettant de réduire, voire de résoudre les inconvénients mentionnés ci-dessus.

Le but de la présente invention est atteint par un système de commande d'un système de frein de parking électrique comportant au moins un moteur électrique à courant continu mettant en œuvre une commande de modulation par largeur d'impulsions ou PWM (Pulse Width Modulation en terminologie anglo-saxonne), afin de pouvoir régler la vitesse du moteur et donc la vitesse de déplacement des plaquettes de frein dans le cas d'un frein à disque ou des garnitures de frein dans le cas de frein à tambour. Les moteurs électriques sont alors commandés, dans certaines phases, par modulation en largeur d'impulsion, et dans d'autres phases à pleine puissance.

Ainsi, par exemple dans le cas d'un changement de plaquettes, le système de commande peut prévoir un recul à vitesse lente du piston. Le contact avec les butées se fait de manière moins brutale. Les risques d'endommagement sont réduits. Il peut même être envisagé de réduire la taille des butées qui n'ont plus à être dimensionnées pour supporter un choc brutal.

Dans le cas d'un test sur banc à rouleaux du véhicule, le système de commande assure une augmentation lente de la force de serrage ce qui permet de limiter l'apparition de vibration.

Le système de commande selon l'invention peut également commander les freins lors de l'application du frein de parking en fonctionnement normal. Par exemple le système de commande est tel qu'il assure, lors d'une première phase, un déplacement rapide des plaquettes vers le disque, puis dans une deuxième phase, un déplacement plus lent des plaquettes, ce qui permet de réduire la puissance requise.

En d'autres termes, le frein de parking électrique est commandé de sorte à pouvoir avoir une vitesse d'actionnement variable au cours d'une phase d'activation, que ce soit, par exemple, en fonctionnement normal, lors d'un entretien des freins et/ou de tests et/ou essais sur ceux-ci.

La présente invention est particulièrement avantageusement dans le cas d'un frein de parking électrique associé à un frein de service hydraulique et encore plus avantageuse, dans le cas d'un système de freinage comportant en outre un système de contrôle de trajectoire (ESP™ pour Electronic Stability Program en terminologie anglo-saxonne) comportant un générateur de pression.

Dans un tel cas la commande PWM permet de doser la puissance partielle électrique se combinant éventuellement avec la puissance hydraulique fournie par le système de freinage, soit du fait de l'appui sur la pédale de frein et/ou du fait du générateur de pression du système ESP.

La présente invention a alors pour objet un système de commande d'un système de frein de parking électrique pour un véhicule automobile comportant au moins deux freins destinés à être disposés au niveau de roues du véhicule automobile, chaque frein comportant un actionneur de frein de parking destiné à être activé par un moteur électrique, ledit système de commande comportant une unité de commande, ladite unité de commande comportant des moyens de commande des moteurs électriques, de sorte que lorsqu'une commande d'appliquer le frein de parking est donnée, les moteurs électriques sont alimentés pour activer les actionneurs et permettre le serrage des freins, lesdits moyens de commande étant configurés pour, dans certaines phases d'activation des actionneurs de frein de parking, commander les moteurs électriques par modulation en largeur d'impulsions, et dans d'autres phases d'activation des actionneurs de frein de parking, commander les moteurs électriques à pleine puissance.

L'unité de commande est avantageusement apte à recevoir des informations extérieures l'informant de commander les moteurs électriques par modulation en largeur d'impulsions.

Par exemple, les moyens de commande comportent au moins un dispositif de commutation de puissance, tel qu'un transistor de puissance ou un triac.

La présente invention a également pour objet un système de freinage comportant un système de commande selon l'invention et un système de frein de parking électrique comportant au moins deux freins destinés à être disposés au niveau de roues du véhicule automobile, chaque frein comportant un actionneur de frein de parking destiné à être activé par un moteur électrique.

Le système de freinage comporte de préférence au moins deux freins de service.

La présente invention a également pour objet un véhicule automobile comportant un système de freinage selon l'invention, le système de frein de parking électrique agissant sur au moins deux des quatre freins. Le système de commande est alors configuré pour commander le système de frein de parking électrique lors d'une application normale du frein de parking électrique.

La présente invention a également pour objet une méthode de commande d'un système de frein de parking électrique comportant une unité de commande et au moins deux freins destinés à être disposés au niveau de roues du véhicule automobile, chaque frein comportant un actionneur de frein de parking activé par un moteur électrique, ladite méthode comportant au moins :
- une étape de commande des moteurs électriques par modulation en largeur d'impulsions, lorsqu'une activation du système de frein de parking électrique est considérée comme requérant une modulation de la vitesse des moteurs électriques
- une étape de commande des moteurs électriques à pleine puissance.

L'étape de commande par PWM peut avoir lieu avoir ou après l'étape de commande à pleine puissance.

Entre outre, les étapes de commande peuvent avoir lieu pendant la même action de freinage ou lors d'actions de freinage différentes.

Dans un exemple de réalisation, dans le cas de changement de plaquettes de frein de frein à disque, les moteurs électrique sont commandés, dans un sens de desserrage des freins, par modulation en largeur d'impulsions, de sorte que leur vitesse de rotation soit inférieure à leur vitesse de rotation pendant une partie au moins d'une phase activation du frein de parking en fonctionnement normal.

Dans un autre exemple de réalisation, dans le cas de montage du véhicule automobile sur un banc d'essai, les moteurs électriques sont commandés par modulation en largeur d'impulsions, de sorte que leur vitesse de rotation varie de manière continue et que la force de serrage des freins varie de manière continue.

Dans un autre exemple de réalisation, dans le cas le cas de montage du véhicule automobile sur un banc d'essai, les moteurs électriques sont commandés par modulation en largeur d'impulsions de sorte que leur vitesse de rotation varie par palier, le passage d'un palier à l'autre étant progressif, et que la force de serrage des freins varie de manière continue par palier, le passage d'un palier à l'autre étant progressif.

Les moteurs électriques peuvent être avantageusement commandés par modulation en largeur d'impulsions, de sorte qu'une phase d'activation normale du système de frein de parking électrique comporte une première partie à une première vitesse et une deuxième partie à une deuxième vitesse, la deuxième partie correspondant à une phase de compression des garnitures de frein, la deuxième vitesse étant inférieure à la première vitesse.

Dans un autre exemple de réalisation, lors d'une phase de détermination de position d'au moins un piston, les moteurs électriques sont commandés, dans un sens de desserrage des freins, par modulation en largeur d'impulsions, de sorte que leur vitesse de rotation soit inférieure à leur vitesse de rotation pendant une partie au moins d'une phase activation du frein de parking en fonctionnement normal.

### BRÈVE DESCRIPTION DES DESSINS

La présente invention sera mieux comprise sur la base de la description qui va suivre et des dessins en annexe sur lesquels:
- la figure 1 est une représentation schématique d'un véhicule automobile, vu de dessous, comportant un système de frein de parking électrique,
- la figure 2 est une représentation graphique d'un exemple de variation de la vitesse de l'actionneur dans un frein d'un système de frein de parking électrique grâce à un système de commande selon l'invention, et dans un frein d'un système de frein de parking électrique de l'état de la technique,
- la figure 3 est une représentation graphique d'un exemple de variation de la force appliquée en fonction du temps dans un frein d'un système de frein de parking électrique grâce à un système de commande selon l'invention et dans un frein d'un système de frein de parking électrique de l'état de la technique,
- la figure 4 est une représentation graphique d'un exemple de variation de la vitesse de l'actionneur dans un frein d'un système de frein de parking électrique grâce à un système de commande selon l'invention dans le cas d'une application normale de frein de parking,
- la figure 5 est une représentation graphique d'un exemple de tension en créneaux utilisable pour alimenter le moteur suivant une commande PWM.

### EXPOSÉ DÉTAILLÉ DE MODES DE RÉALISATION PARTICULIERS

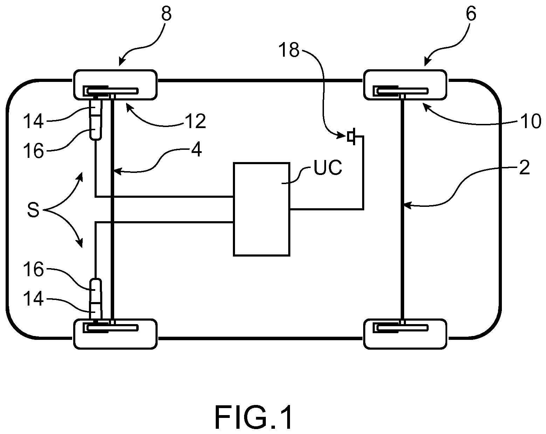

Dans la description qui va suivre, les freins du système de frein de parking électrique sont des freins à disque, étant bien entendu que la mise en œuvre de freins à tambour ne sort pas du cadre de la présente invention. Sur la figure 1, on peut voir une représentation schématique d'un véhicule automobile équipé d'un système de frein de parking électrique S.

Le véhicule automobile comporte un essieu avant 2 et un essieu arrière 4, équipé chacun de deux roues 6, 8 respectivement. Chaque roue est équipée d'un frein à disque 10, 12 respectivement.

Le système de frein de parking électrique S met en œuvre au moins deux freins, en général les freins 12 montés au niveau des roues arrière.

Selon un autre exemple, le véhicule selon l'invention comporte quatre freins de parking.

Le système comporte également au niveau de chaque frein 12, un actionneur 14 pour appliquer les plaquettes de frein contre le disque solidaire de la roue.

Par exemple, l'actionneur 14 est entraîné par un moteur électrique 16 à courant continu via un réducteur (non représenté).

Le frein à disque comporte par exemple un piston dans lequel une vis est montée (non représenté). La vis est entraînée en rotation par le moteur électrique provoquant le déplacement du piston le long de la vis. Le piston pousse sur une plaquette qui entre en contact avec le disque. Par réaction, l'étrier coulisse appliquant l'autre plaquette sur l'autre face du disque.

Un système de commande du système de frein de parking électrique comporte une unité de commande UC destinée à commander l'application du frein de parking. En outre, dans l'exemple représenté il comporte un organe de commande 18 disposé dans l'habitacle au moyen duquel le conducteur peut activer le frein de parking électrique. L'organe de commande est par exemple un bouton.

Lorsque le conducteur appuie sur le bouton d'application du frein de parking, le signal est transmis à l'unité de commande qui active l'actionneur en alimentant le moteur électrique, provoquant le déplacement des plaquettes de frein vers le disque.

La vitesse de déplacement des plaquettes est proportionnelle au courant d'alimentation du moteur. Ce courant est constant et est fixé par le circuit d'alimentation du véhicule automobile.

Selon l'invention, l'unité de commande comporte des moyens configurés pour réaliser une commande en modulation de largeur d'impulsion ou commande PWM (Pulse Width Modulation en terminologie anglo-saxonne) du moteur électrique 16.

La commande PWM du moteur 16 permet de faire varier la vitesse de rotation du moteur électrique et donc la vitesse d'actionnement des freins.

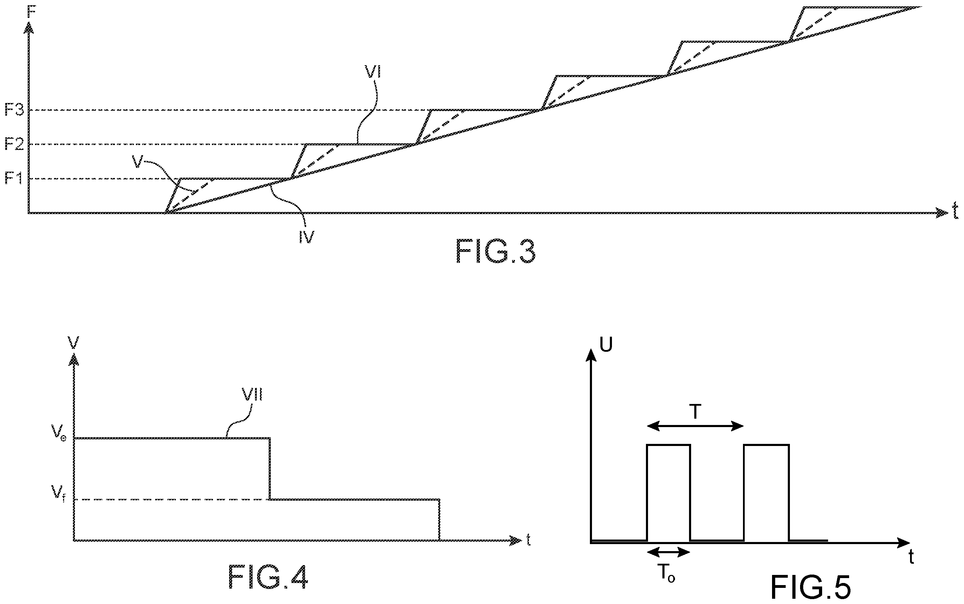

La commande PWM consiste à alimenter le moteur électrique avec une tension en créneaux. Sur la figure 5, on peut voir représenté un exemple de tension U en créneaux utilisable pour alimenter le moteur suivant une commande PWM. On obtient alors une tension moyenne qui dépend du rapport entre la durée des créneaux T₀ et la période du signal T. La vitesse du moteur va dépendre de la tension moyenne, en choisissant les caractéristiques du signal en créneaux, on peut faire varier la vitesse du moteur.

La commande PWM est par exemple mise en œuvre par un dispositif de commutation et /ou de commande puissance, tel qu'au moins un transistor de puissance, par exemple un transistor à effet de champ à grille isolée également désigné MOSFET (Metal Oxide Semiconductor Field Effect Transistor en terminologie anglo-saxonne), un triac...

Selon un premier exemple d'application, la commande PWM du moteur 16 est mise en œuvre lors du changement des plaquettes. Par exemple, il est indiqué à l'unité de commande que l'on souhaite remplacer les plaquettes de frein.

Lorsque les plaquettes de frein ont atteint le niveau d'usure requérant leur changement, le moteur est actionné de sorte à provoquer un déplacement du piston en éloignement du disque. L'unité de commande détecte que le frein est complètement ouvert, lorsqu'elle mesure une augmentation brusque du courant d'alimentation du moteur du fait d'un contact entre le piston et des moyens de butée portés par le frein.

Selon l'invention, lorsque l'unité de commande est informée qu'un changement de plaquettes est requis, elle commande le déplacement du moteur avec une commande PWM, de sorte que le recul du piston du frein à disque se fasse à vitesse lente par rapport à la vitesse du moteur sans commande PWM au moins au voisinage de la butée, i.e. position reculée du piston par rapport au disque.

Ainsi le contact entre le piston et les moyens de butée n'est pas brusque. Les risques d'endommagement du frein sont réduits. Il peut même être envisagé de réduire la taille des moyens de butée, réduisant la masse du frein.

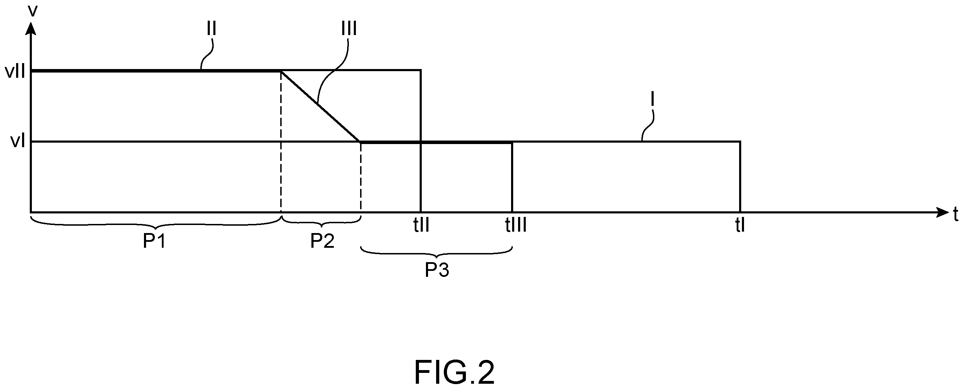

Sur la figure 2, on peut voir une représentation graphique schématique de la vitesse v de déplacement de l'actionneur 14 dans le sens d'ouverture du frein en fonction du temps t. La vitesse v est proportionnelle à la vitesse de rotation du moteur 16. La courbe I représente la vitesse d'un système selon l'invention, la courbe II représente la vitesse d'un système de l'état de la technique.

La vitesse vII de la courbe II est plus élevée et le temps d'ouverture tII est plus court mais le choc entre le piston et l'étrier est plus brutal, et donc davantage susceptible de détériorer le frein.

La courbe I montre une vitesse vI plus faible que vII et donc un temps d'ouverture tI plus long, mais de fait l'énergie de contact est plus faible. Les risques d'endommagement sont sensiblement réduits.

Selon une variante, la commande PWM peut être telle que la vitesse du moteur varie par palier, plus particulièrement diminue par palier. Dans l'exemple représenté, sur la courbe III, la vitesse est, dans une première phase P1 égale à vII, puis dans une deuxième phase P2 diminue continûment suivant une fonction linéaire pour être égale à vI. A la fin d'une phase P3, le piston entre en contact avec l'étrier au temps tIII entre tII et tI. Ainsi la durée d'ouverture tIII est réduite par rapport à celle tI avec une vitesse au moment du choc égale à VI et une même dissipation d'énergie.

La vitesse d'avancement ou de recul du piston de frein de type connu est par exemple égale à 1,2 mm/s.

L'application d'une commande PWM selon l'invention permet de diminuer cette vitesse par exemple d'un rapport compris entre 1,1 et 100, de préférence entre 1,5 et 30, de manière encore préférée entre 2 et 5, par exemple 2 ou 3 ou 4 fois.

Selon un autre exemple de réalisation, la commande PWM du moteur est mise en œuvre lorsque le véhicule est monté sur un banc à rouleaux et que les freins sont testés. La commande PWM permet de faire varier plus progressivement et plus lentement la force de freinage. En effet, la force de freinage dépend de la fermeture du frein, i.e. de la position des plaquettes par rapport au disque. La manière dont la force de freinage varie dans le temps dépend de la manière dont se déplacent les plaquettes et donc de la vitesse de fermeture du frein.

En maîtrisant finement la variation de cette vitesse, il est possible de maîtriser plus finement la variation de la force de freinage, en comparaison de l'état de la technique.

Lorsque l'unité de commande est informée que le véhicule est monté sur un banc à rouleaux, elle applique une commande PWM au moteur, afin d'augmenter la force de freinage plus lentement et plus progressivement. Ainsi les mouvements non maîtrisés/les vibrations du véhicule sont réduits.

Sur la figure 3, on peut voir des exemples de variation de la force F de freinage en fonction du temps t dans le cas d'un système de freinage selon l'invention (courbes IV et V) et dans le cas d'un système de freinage de l'état de la technique (courbe VI).

Au vu de la courbe VI, la force varie par palier F1, F2, F3... avec un passage d'un palier à l'autre quasi-instantanément. La variation par palier est préprogrammée. Lorsque le véhicule est sur un banc à rouleaux, les freins fonctionnent selon un programme spécifique appelé programme fonctionnement banc à rouleaux. L'activation de ce programme est obtenue soit manuellement par une séquence de commande, soit par détection du fait que le véhicule est monté sur un banc à rouleaux qui a alors un comportement dynamique particulier.

La courbe IV montre également une augmentation de la vitesse par palier, Grâce à la commande PWM selon l'invention, le passage d'un palier à l'autre se fait progressivement, en faisant varier la tension moyenne d'alimentation.

La courbe V montre une augmentation progressive de la force de freinage obtenue grâce à la présente invention.

Ainsi les causes de vibration du véhicule sont réduites, voire supprimées, ce qui réduit les risques de fausser les mesures.

Dans cet exemple d'application, la commande PWM est telle que lors des paliers la tension moyenne est constante, et lors du passage d'un palier à l'autre la tension moyenne augmente progressivement.

L'invention permet d'éviter des rejets erronés d'un véhicule du fait d'une fausse mesure sur le frein de parking.

En effet, le fonctionnement normal d'un frein de parking est généralement un fonctionnement statique, i.e. les roues sont immobiles et les freins sont serrés.

Or pour tester le frein de parking en pente sur un banc, la pente est simulée de manière dynamique en mettre en rotation les roues. Or si on commande les moteurs électriques uniquement à pleine puissance, le système de freinage va détecter un blocage des roues et va relâcher le freinage. Le frein de parking sera alors considéré comme défectueux.

Grâce à l'invention, les moteurs sont commandés pendant une phase de freinage en modulation en largeur d'impulsion, ce qui permet une augmentation lente du niveau de freinage. D'une part il n'y a pas de risque de détection d'un blocage des roues et de relâchement du freinage, et donc de rejet erroné du véhicule ; et d'autre part les risques d'endommagement des freins sont réduits.

Selon un autre exemple d'application, la commande PWM du moteur est utilisée lors du fonctionnement normal du frein de parking. On entend par « fonctionnement normal du frein de parking », le fonctionnement attendu lorsque le conducteur veut stationner son véhicule et l'immobiliser, et qu'il active le frein de parking électrique.

Par exemple, l'unité de commande commande le frein de sorte que sur une première partie de la course, avant que les plaquettes n'entrent en contact avec le disque, le piston est déplacé à une vitesse élevée, et de sorte que sur une deuxième partie de la course, lors de la compression des plaquettes contre le frein, le piston se déplace à vitesse plus lente, ce qui réduit la puissance requise. La durée d'activation du frein de parking est légèrement plus longue que dans le cas d'un système classique, mais cette durée étant en général courte, l'allongement de la phase d'activation est pratiquement imperceptible pour l'utilisateur.

Sur la figure 4, on peut voir une représentation schématique de cette variation de vitesse V. La courbe VII monte un déplacement à vitesse élevée Ve, suivi d'un déplacement à vitesse faible Vf correspond lors duquel a lieu la compression des plaquettes.

Il sera compris que la vitesse peut varier en plus de deux phases. Ou encore, lors de la phase de compression la vitesse peut diminuer continûment comme cela est schématisé par la courbe VIII.

Selon une variante, elle peut diminuer continûment.

Selon un exemple, l'unité de commande applique une commande PWM pendant toute l'activation du frein de parking.

Selon un autre exemple, la phase A se fait selon une commande classique et la phase B selon une commande PWM.

Selon un autre exemple, le frein de parking électrique, en fonctionnement normal, peut être commandé en tout ou rien ou avec une commande PWM suivant les situations.

D'autres situations peuvent impliquer une commande PWM seule du système de frein de parking ou une combinaison d'une commande PWM et d'une commande en tout ou rien.

Selon un autre exemple, la commande PWM peut être appliquée lorsque le frein de parking est utilisé comme frein de secours. La commande de frein de secours est obtenue en appuyant sur le bouton de frein lorsqu'on roule à une vitesse non négligeable ; par exemple pour une vitesse supérieure à 5 km/h, l'activation du bouton de freinage active le frein de secours, alors que pour une vitesse nulle ou inférieure à 5 km/h on applique le frein de parking.

La commande PWM selon l'invention peut, en outre, être mise en œuvre en dehors des phases de freinage, que ce soit en freinage de service, de parking et/ou de secours.

Par exemple, chaque fois que le calculateur a besoin de connaître la position du piston du frein à disque, il fait reculer le piston jusqu'à la butée arrière. Ceci est par exemple réalisé après un changement de plaquettes, mais peut être réalisé périodiquement par le calculateur du correcteur électronique de trajectoire ou ESP® (Electronic Stability Program en terminologie anglo-saxonne). La commande PWM est par exemple appliquée à chaque fois que le calculateur déclenche une phase de détermination de la position du piston. Pour déterminer la position du piston, celui-ci est reculé jusqu'à venir en appui contre la butée arrière, formant une position de référence. A partir de cette position de référence, le calculateur peut déterminer les positions suivantes du pistons, par exemple en comptant le nombre de tours du moteur électrique de l'actionneur. En mettant en œuvre la commande PWM, la vitesse du piston est réduite à l'approche de la butée arrière, ce qui réduit les risques d'endommagement sans perturber la phase de détermination de la position du piston.

Avantageusement la commande PWM est appliquée à tout type de fonctionnement de freins, frein de parking ou frein de secours, pendant une phase de freinage et en dehors d'une phase de freinage.

Le moyens permettant la mise en œuvre de la commande PWM peuvent être spécifiques aux freins pour réaliser ces commandes et/ou être ceux déjà mis en œuvre par ailleurs, par exemple ceux mis en œuvre dans le calculateur de contrôle de la modulation de freinage tel que I'ESP® (Electronic Stability Program en terminologie anglo-saxonne).

L'invention s'applique aussi bien au frein de service hydraulique avec frein de parking et/ou de secours électrique, qu'au frein entièrement électrique, i.e. frein de service, frein de parking et/ou secours, appelé EMB pour Electromechanical Brake en terminologie anglo-saxonne.

Dans un exemple de réalisation, l'invention s'applique à un frein de service électrique avec ou sans frein de parking. Le moteur électrique est commandé au moins dans certaines phases d'activation du moteur électrique par une modulation en largeur d'impulsions, par exemple pour changer les plaquettes de frein ou pour repérer la position de piston

En outre l'invention s'applique aux freins à disques comportant un ou plusieurs pistons, dans lesquels chaque piston est déplacé par son propre actionneur. Le déplacement de chaque actionneur peut être commandé différemment.
- 2 -: essieu avant
- 4 -: essieu arrière
- 6, 8 -: roues
- 10, 12 -: freins
- 14 -: actionneur
- 16 -: moteur électrique
- S -: système de frein de parking électrique
- UC -: Unité de commande

## Revendications

1. Système de commande d'un système de frein de parking électrique pour un véhicule automobile comportant au moins deux freins (12) destinés à être disposés au niveau de roues (8) du véhicule automobile, chaque frein (12) comportant un actionneur (14) de frein de parking destiné à être activé par un moteur électrique (16), ledit système de commande comportant une unité de commande (UC), ladite unité de commande (UC) comportant des moyens de commande des moteurs électriques (16), de sorte que lorsqu'une commande d'appliquer le frein de parking est donnée, les moteurs électriques (16) sont alimentés pour activer les actionneurs et permettre le serrage des freins, **caractérisé en ce que** lesdits moyens de commande sont configurés pour, dans certaines phases d'activation des actionneurs de frein de parking, commander les moteurs électriques par modulation en largeur d'impulsion, et dans d'autres phases d'activation des actionneurs de frein de parking, commander les moteurs électriques à pleine puissance.

2. Système de commande d'un frein de parking électrique selon la revendication 1, dans lequel l'unité de commande (UC) est apte à recevoir des informations extérieures l'informant de commander les moteurs électriques (16) par modulation en largeur d'impulsions.

3. Système de commande d'un frein de parking électrique selon la revendication 1 ou 2, dans lequel les moyens de commande comportent au moins un dispositif de commutation de puissance, tel qu'un transistor de puissance ou un triac.

4. Système de freinage comportant un système de commande selon l'une des revendications 1 à 3 et un système de frein de parking électrique comportant au moins deux freins (12) destinés à être disposés au niveau de roues (8) du véhicule automobile, chaque frein (12) comportant un actionneur (14) de frein de parking destiné à être activé par un moteur électrique (16).

5. Système de freinage selon la revendication 4, comportant au moins deux freins de service.

6. Véhicule automobile comportant un système de freinage selon la revendication 4 ou 5, le système de frein de parking électrique (S) agissant sur au moins deux des quatre freins, et, dans lequel, le système de commande est configuré pour commander le système de frein de parking électrique (S) lors d'une application normale du frein de parking électrique.

7. Méthode de commande d'un système de frein de parking électrique comportant une unité de commande (UC) et au moins deux freins (12) destinés à être disposés au niveau de roues (8) du véhicule automobile, chaque frein (12) comportant un actionneur (14) de frein de parking activé par un moteur électrique (16), ladite méthode comportant au moins:
- une étape de commande des moteurs électriques par modulation en largeur d'impulsions, lorsqu'une activation du système de frein de parking électrique est considérée comme requérant une modulation de la vitesse des moteurs électriques,
- une étape de commande des moteurs électriques à pleine puissance.

8. Méthode de commande selon la revendication 7, dans laquelle, dans le cas de changement de plaquettes de frein de frein à disque, les moteurs électrique (16) sont commandés, dans un sens de desserrage des freins, par modulation en largeur d'impulsions, de sorte que leur vitesse de rotation soit inférieure à leur vitesse de rotation pendant une partie au moins d'une phase activation du frein de parking en fonctionnement normal.

9. Méthode de commande selon la revendication 7 ou 8, dans laquelle dans le cas de montage du véhicule automobile sur un banc d'essai, les moteurs électriques (16) sont commandés par modulation en largeur d'impulsions, de sorte que leur vitesse de rotation varie de manière continue et que la force de serrage des freins varie de manière continue.

10. Méthode de commande selon la revendication 7 ou 8, dans laquelle dans le cas de montage du véhicule automobile sur un banc d'essai, les moteurs électriques (16) sont commandés par modulation en largeur d'impulsions de sorte que leur vitesse de rotation varie par palier, le passage d'un palier à l'autre étant progressif, et que la force de serrage des freins varie de manière continue par palier, le passage d'un palier à l'autre étant progressif.

11. Méthode de commande selon l'une des revendications 7 à 10, dans lequel les moteurs électriques (16) sont commandés par modulation en largeur d'impulsions, de sorte qu'une phase d'activation normale du système de frein de parking électrique comporte une première partie à une première vitesse et une deuxième partie à une deuxième vitesse, la deuxième partie correspondant à une phase de compression des garnitures de frein, la deuxième vitesse étant inférieure à la première vitesse.

12. Méthode de commande selon l'une des revendications 7 à 11, dans laquelle, lors d'une phase de détermination de position d'au moins un piston, les moteurs électriques (16) sont commandés, dans un sens de desserrage des freins, par modulation en largeur d'impulsions, de sorte que leur vitesse de rotation soit inférieure à leur vitesse de rotation pendant une partie au moins d'une phase activation du frein de parking en fonctionnement normal.

## Patentansprüche

1. System zum Steuern eines elektrischen Parkbremsensystems für ein Kraftfahrzeug, das mindestens zwei Bremsen (12) aufweist, die dazu bestimmt sind, im Bereich von Rädern (8) des Kraftfahrzeugs angeordnet zu werden, wobei jede Bremse (12) einen Parkbremsenaktor (14) aufweist, der dazu bestimmt ist, von einem Elektromotor (16) aktiviert zu werden, wobei das Steuersystem eine Steuereinheit (UC) aufweist, wobei die Steuereinheit (UC) Steuereinrichtungen der Elektromotoren (16) aufweist, so dass, wenn ein Befehl zum Anwenden der Parkbremse gegeben wird, die Elektromotoren (16) versorgt werden, um die Aktoren zu aktivieren und das Anziehen der Bremsen zu erlauben, **dadurch gekennzeichnet, dass** die Steuereinrichtungen konfiguriert sind, in bestimmten Aktivierungsphasen der Parkbremsenaktoren die Elektromotoren durch Impulsbreitenmodulation und in anderen Aktivierungsphasen der Parkbremsenaktoren die Elektromotoren mit voller Leistung zu steuern.

2. Steuersystem einer elektrischen Parkbremse nach Anspruch 1, wobei die Steuereinheit (UC) externe Informationen empfangen kann, die sie informieren, die Elektromotoren (16) durch Impulsbreitenmodulation zu steuern.

3. Steuersystem einer elektrischen Parkbremse nach Anspruch 1 oder 2, wobei die Steuereinrichtungen mindestens eine Leistungsschaltvorrichtung wie einen Leistungstransistor oder einen Triac aufweisen.

4. Bremssystem, das ein Steuersystem nach einem der Ansprüche 1 bis 3 und ein elektrisches Parkbremsensystem aufweist, das mindestens zwei Bremsen (12) aufweist, die dazu bestimmt sind, im Bereich von Rädern (8) des Kraftfahrzeugs angeordnet zu werden, wobei jede Bremse (12) einen Parkbremsenaktor (14) aufweist, der dazu bestimmt ist, von einem Elektromotor (16) aktiviert zu werden.

5. Bremssystem nach Anspruch 4, das mindestens zwei Betriebsbremsen aufweist.

6. Kraftfahrzeug, das ein Bremssystem nach Anspruch 4 oder 5 aufweist, wobei das elektrische Parkbremsensystem (S) auf mindestens zwei der vier Bremsen einwirkt, und wobei das Steuersystem konfiguriert ist, das elektrische Parkbremsensystem (S) bei einer normalen Anwendung der elektrischen Parkbremse zu steuern.

7. Verfahren zur Steuerung eines elektrischen Parkbremsensystems, das eine Steuereinheit (UC) und mindestens zwei Bremsen (12) aufweist, die dazu bestimmt sind, im Bereich von Rädern (8) des Kraftfahrzeugs angeordnet zu werden, wobei jede Bremse (12) einen Parkbremsenaktor (14) aufweist, der von einem Elektromotor (16) aktiviert wird, wobei das Verfahren mindestens aufweist:
- einen Schritt der Steuerung der Elektromotoren durch Impulsbreitenmodulation, wenn eine Aktivierung des elektrischen Parkbremsensystems als eine Modulation der Geschwindigkeit der Elektromotoren erfordernd angenommen wird,
- einen Schritt der Steuerung der Elektromotoren mit voller Leistung.

8. Steuerverfahren nach Anspruch 7, wobei im Fall des Austauschs von Bremsbelägen von Scheibenbremsen die Elektromotoren (16) in einer Richtung des Lösens der Bremsen durch Impulsbreitenmodulation derart gesteuert werden, dass ihre Drehgeschwindigkeit geringer ist als ihre Drehgeschwindigkeit während mindestens eines Teils einer Aktivierungsphase der Parkbremse im Normalbetrieb.

9. Steuerverfahren nach Anspruch 7 oder 8, wobei im Fall der Montage des Kraftfahrzeugs auf einen Prüfstand die Elektromotoren (16) durch Impulsbreitenmodulation derart gesteuert werden, dass ihre Drehgeschwindigkeit kontinuierlich variiert und die Anzugskraft der Bremsen kontinuierlich variiert.

10. Steuerverfahren nach Anspruch 7 oder 8, wobei im Fall der Montage des Kraftfahrzeugs auf einen Prüfstand die Elektromotoren (16) durch Impulsbreitenmodulation derart gesteuert werden, dass ihre Drehgeschwindigkeit stufenweise variiert, wobei der Übergang von einer Stufe zur anderen progressiv ist, und die Anzugskraft der Bremsen stufenweise kontinuierlich variiert, wobei der Übergang von einer Stufe zur anderen progressiv ist.

11. Steuerverfahren nach einem der Ansprüche 7 bis 10, wobei die Elektromotoren (16) durch Impulsbreitenmodulation derart gesteuert werden, dass eine normale Aktivierungsphase des elektrischen Parkbremsensystems einen ersten Teil mit einer ersten Geschwindigkeit und einen zweiten Teil mit einer zweiten Geschwindigkeit aufweist, wobei der zweite Teil einer Komprimierungsphase der Bremsbeläge entspricht, wobei die zweite Geschwindigkeit niedriger ist als die erste Geschwindigkeit.

12. Steuerverfahren nach einem der Ansprüche 7 bis 11, wobei in einer Phase der Positionsbestimmung mindestens eines Kolbens die Elektromotoren (16) in einer Richtung des Lösens der Bremsen durch Impulsbreitenmodulation derart gesteuert werden, dass ihre Drehgeschwindigkeit niedriger ist als ihre Drehgeschwindigkeit während mindestens eines Teils einer Aktivierungsphase der Parkbremse im Normalbetrieb.

## Claims

1. A system for controlling an electric parking brake system for an automobile vehicle including at least two brakes (12) for being disposed at wheels (8) of the automobile vehicle, each brake (12) including a parking brake actuator (14) for being activated by an electric motor (16), said control system including a control unit (UC), said control unit (UC) including means for controlling the electric motors (16), such that when a control command to apply the parking brake is given, the electric motors (16) are supplied to activate the actuators and enable brakes to be applied, **characterised in that** said control means are configured for, in some activation phases of the parking brake actuators, controlling the electric motors by pulse width modulation, and in other activation phases of the parking brake actuators, controlling the electric motors at full power.

2. The system for controlling an electric parking brake according to claim 1, wherein the control unit (UC) is able to receive external information informing it to control the electric motors (16) by pulse width modulation.

3. The system for controlling an electric parking brake according to claim 1 or 2, wherein the control means include at least one power switching device, such as a power transistor or a triac.

4. A braking system including a control system according to one of claims 1 to 3 and an electric parking brake system including at least two brakes (12) for being disposed at wheels (8) of the automobile vehicle, each brake (12) including a parking brake actuator (14) for being activated by an electric motor (16).

5. The braking system according to claim 4, including at least two service brakes.

6. An automobile vehicle including a braking system according to claim 4 or 5, the electric parking brake system (S) acting on at least two of the four brakes, and, wherein, the control system is configured to control the electric parking brake system (S) during a normal application of the electric parking brake.

7. A method for controlling an electric parking brake system including a control unit (UC) and at least two brakes (12) for being disposed at wheels (8) of the automobile vehicle, each brake (12) including a parking brake actuator (14) activated by an electric motor (16), said method including at least:
- a step of controlling the electric motors by pulse width modulation, when an activation of the electric parking brake system is considered as requiring a speed modulation of the electric motors,
- a step of controlling the electric motors at full power.

8. The control method according to claim 7, wherein, in the case where brake pads of a disc brake are changed, the electric motors (16) are controlled, in a brake release direction, by pulse width modulation, such that their speed of rotation is lower than their speed of rotation during part of at least one activation phase of the parking brake in normal operation.

9. The control method according to claim 7 or 8, wherein in the case where the automobile vehicle is mounted onto a test bench, the electric motors (16) are controlled by pulse width modulation, such that their speed of rotation continuously varies and the brake application force continuously varies.

10. The control method according to claim 7 or 8, wherein in the case where the automobile vehicle is mounted onto a test bench, the electric motors (16) are controlled by pulse width modulation such that their speed of rotation varies stepwise, switching from one step to the other being gradual, and the brake application force continuously varies stepwise, switching from one step to the other being gradual.

11. The control method according to one of claims 7 to 10, wherein the electric motors (16) are controlled by pulse width modulation, such that a normal activation phase of the electric parking brake system includes a first part at a first speed and a second part at a second speed, the second part corresponding to a compression phase of the brake linings, the second speed being lower than the first speed.

12. The control method according to one of claims 7 to 11, wherein, during a phase of determining a position of at least one piston, the electric motors (16) are controlled, in a brake release direction, by pulse width modulation, such that their speed of rotation is lower than their speed of rotation during part of at least one activation phase of the parking brake in normal operation.
